**Europäisches Patentamt**

**European Patent Office**

**Office européen des brevets**

(19)

(11) Numéro de publication: **0 029 761**
**B1**

(12)

# FASCICULE DE BREVET EUROPEEN

(45) Date de publication du fascicule du brevet: **19.10.83**

(51) Int. Cl.³: **G 05 D 23/13**

(21) Numéro de dépôt: **80401552.7**

(22) Date de dépôt: **31.10.80**

(54) **Mitigeur pour chauffe-eau instantané.**

(30) Priorité: **15.11.79 FR 7928226**

(43) Date de publication de la demande:
**03.06.81 Bulletin 81/22**

(45) Mention de la délivrance du brevet:
**19.10.83 Bulletin 83/42**

(84) Etats contractants désignés:
**DE GB IT**

(56) Documents cités:
**FR - A - 2 019 369**
**FR - A - 2 240 396**
**FR - A - 2 326 122**
**US - A - 2 879 943**
**US - A - 2 997 239**
**US - A - 3 090 559**

(73) Titulaire: **ETABLISSEMENTS TRUBERT**
**194, Avenue du Général Leclerc**
**F-78220 Viroflay (FR)**

(72) Inventeur: **Trubert, Denis**
**6, avenue du Général Gouraud**
**F-78220 Viroflay (FR)**

(74) Mandataire: **Collignon, Pierre et al,**
**Cabinet Collignon 6, rue de Madrid**
**F-75008 Paris (FR)**

Courier Press, Leamington Spa, England.

Mitigeur pour chauffe-eau instantané

La présente invention concerne la réalisation d'un mitigeur thermostatique compatible avec une source d'eau chaude fournie par un appareil à gaz dit ''instantané'', c'est-à-dire s'allumant uniquement lorsque l'on crée un puisage d'eau chaude.

Jusqu'à ces derniers temps, tous les fabricants de mitigeurs dits mécaniques ou thermostatiques déconseillaient fortement d'alimenter leurs appareils avec une telle source d'eau chaude. En effet, cette production de calories est assez peu modulable et reste même constante dans les appareils anciens ou récents de petite puissance. Le mitigeur, dont le rôle fondamental est de doser les débits d'eau chaude et froide, occasionne une demande fortement variable d'eau chaude, que le générateur est incapable de suivre. Lorsque la demande du mitigeur diminue, la température de l'eau chaude a, de plus, souvent tendance à monter, provoquant encore un affaiblissement de la demande et, au-delà d'un certain minimum, il y a extinction du générateur, de sorte que le mitigeur a de nouveau brusquement besoin de calories et la générateur se rallume, et ainsi de suite. On comprend que son fonctionnement est perturbé et tout le monde sait que, dans ce cas, le résultat est décevant.

Par le document FR—A—2 240 396 on connait un robinet mélangeur à commande unique qui agit par l'intermédiaire d'un organe thermostatique sur un piston creux coulissant longitudinalement à l'intérieur d'une chambre et dont une extrémité régale progressivement un passage d'arrivée d'eau froide alors que son extrémité opposée commande en passage d'arrivée d'eau chaude. Il est aussi connu, par le document US—A—2 997 239, un mélangeur thermostatique dans lequel le système mobile réglant les arrivées d'eau froide et d'eau chaude comprend deux plateaux montés à l'opposé l'un de l'autre sur une tige coulissante reliée à l'organe de commande thermostatique en constituant deux clapets destinés à venir respectivement en butée contre des sièges opposés d'arrivée d'eau chaude et d'eau froide.

Les dispositifs décrits dans les deux documents mentionnés ci-dessus présentent l'inconvénient d'assurer la commande des arrivées d'eau chaude et d'eau froide au moyen de deux clapets plats, car le fonctionnement, de tels clapets plats soumis à l'attaque de l'eau et aux dépôts de calcaire n'est pas satisfaisant.

L'invention a pour but de proposer un mitigeur à thermostat avec robinet incorporé qui soit d'une réalisation plus simple et moins coûteuse que tous les appareils proposés à ce jour et qui sont compatible avec les générateurs instantanés.

Un mitigeur thermostatique selon l'invention est défini dans les revendications et en particulier dans la revendication 1.

L'idée première repose sur le fait que, dans beaucoup de cas, le générateur d'eau chaude est à puissance constante. Un calcul simple montre que le débit d'eau mitigée est imposé à partir du moment où la température de cette eau mitigée est choisie, la température d'alimentation de l'eau froide étant évidemment indépendante de l'action de l'utilisateur. Le débit d'eau mitigée étant imposé, il a paru inutile à l'inventeur de conserver un robinet traditionnel progressif. Le mitigeur selon l'invention ne fonctionne donc, par exemple à 37°C, qu'avec le robinet de sortie grand ouvert. Cette disposition permet de réaliser un appareil à une seule manette tournante de commande, donc un appareil exceptionnellement simple fiable et peu coûteux. Avec une seule manette disponible pour réaliser les différentes opérations fonctionnelles, on a recherché la succession des opérations suivantes, au fur et à mesure qu'on tourne la manette de commande, à partir de la fermeture de l'écoulement de l'eau:

1. fermeture de l'écoulement de l'eau;
2. ouverture progressive avec sortie d'eau froide uniquement;
3. montée en température par addition progressive d'eau chaude: le générateur d'eau chaude s'allume dès que la demande est suffisante, mais il ne s'agit toujours que d'un mitigeur mécanique et aucune température annoncée n'apparaît, la température d'eau chaude restant cependant inférieure à 30 ou 35°C, au besoin par réglage de l'admission dans le mitigeur, comme on le verra plus loin;
4. réglage et stabilité thermostatique de l'eau mitigée avec possibilité d'effectuer une lecture précise sur un cadran gradué, par exemple entre 35 et 39°C car c'est naturellement dans cette zone de température que la stabilité est intéressante puisque cette zone correspond à la température de l'eau utilisée pour une douche;
5. enfin éventuellement, obtention de la température maximale par fermeture de l'arrivée d'eau froide.

Pour bien faire comprendre l'invention, on en décrira ci-après un exemple d'exécution en référence au dessin annexé, dans lequel:

la figure 1 est une coupe axiale d'un mitigeur selon l'invention; et

la figure 2 est une coupe transversale d'un mitigeur selon l'invention complété par un dispositif de réglage du débit de l'alimentation en eau chaude.

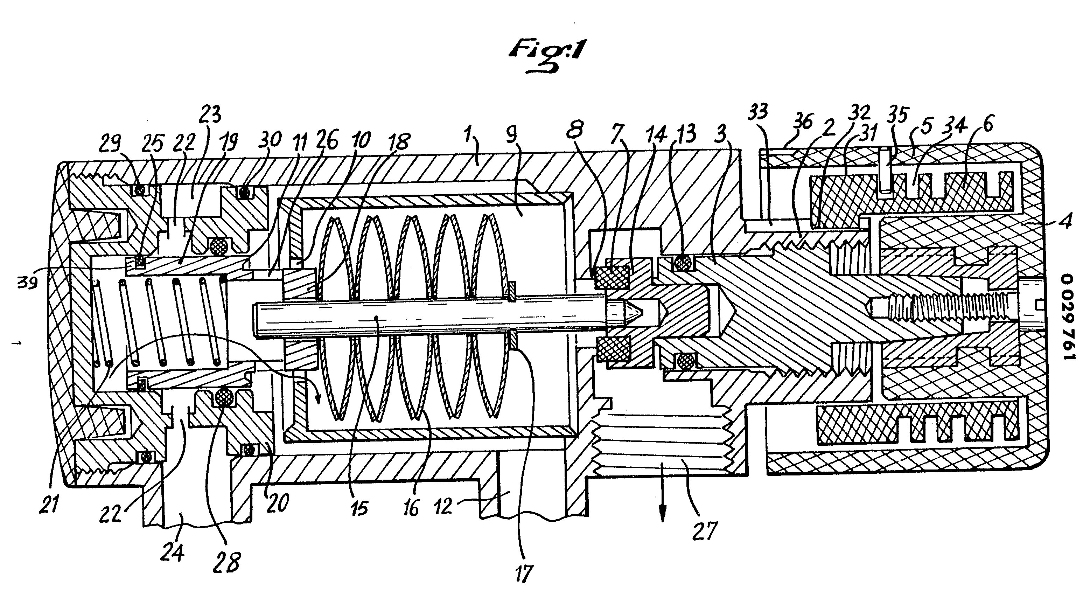

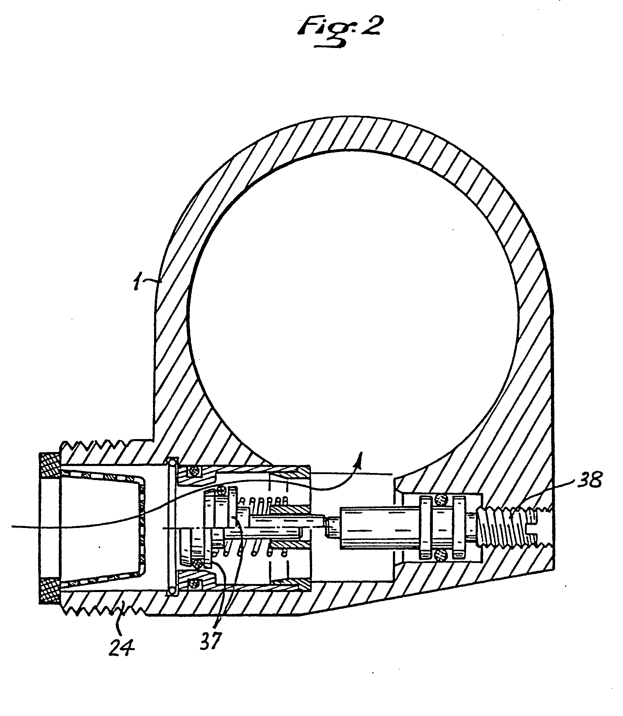

Dans l'exemple d'exécution représenté sur la figure 1, le mitigeur est constitué par un corps 1 de forme générale cylindrique terminé à l'une de ses extrémités par un col 2 fileté intérieurement dans lequel se visse un poussoir 3 solidaire d'une manette tournante de commande 4 qui porte une jupe annulaire 5 autour d'un porte-cadran 6 destiné à coulisser sans tourner sur le col 2 comme on l'expliquera plus complètement dans la suite de l'exposé. En position de fermeture du mitigeur, le poussoir 3 est en fin de course vers l'intérieur du corps 1 et maintient un clapet principal de sortie d'eau 7 en appui contre un siège annulaire fixe 8 formant à l'intérieur du corps 1 la sortie de la chambre de mélange 9 dont l'entrée opposée 10 constitue le siège annulaire d'un clapet 11 contrôlant l'entrée d'eau froide provenant de l'arrivée d'eau froide 12. On a indiqué en 13 un anneau torique engagé dans une gorge de la périphérie du poussoir 3 pour assurer l'étanchéité entre le corps 1 et le poussoir 3. On remarquera que le clapet principal 7 est porté par une pièce 14 poussée vers le siège 8 par l'action du poussoir 3 sur un épaulement de cette pièce encastrée dans le poussoir avec possibilité d'un déplacement relatif longitudinal.

A l'intérieur de la chambre de mélange 9 est monté un axe 15 poussé vers le clapet principal 7 par l'organe thermostatique 16 composé d'une suite de rondelles d'arrêt bimétalliques découpées connues (voir par exemple le document US—A—3 090 559), montée entre un segment d'arrêt 17 solidaire de l'axe 15, du côté du clapet principal 7, et la tête 18 d'un tiroir creux 19 qui porte le clapet 11 et qui coulisse dans une cage 20 en étant poussé vers le clapet 7 par un ressort intérieur de compression 21 entre le fond de la cage 20 et un épaulement intérieur du tiroir 19. La cage 20 présente latéralement des passages 22 communiquant avec un canal périphérique 23 alimenté en eau chaude par l'arrivée d'eau chaude 24. Dans la position de fermeture représentée sur la figure 1, le tiroir 19 recouvre intérieurement les passages 22 et l'extrémité 39, opposée au clapet 11, sur sa surface externe présente une gorge annulaire dans laquelle est monté un segment fendu 25 en polytétrafluoréthylène assurant pratiquement l'obturation étanche de l'entrée d'eau chaude entre les passages 22 et l'intérieur du tiroir creux 19. Quand ce tiroir 19 se déplace vers la droite de la figure 1, comme on l'expliquera, il découvre les passages 22 et l'eau chaude pénètre alors dans ce tiroir et sortant par des ouvertures latérales 26 ménagées vers la tête 18 du tiroir et en communication avec l'entrée 10 de la chambre de mélange 9. L'eau sort de la chambre 9 à travers le siège 8 lors de l'ouverture du clapet principal 7 et sort du mitigeur par l'ouverture latérale 27.

Un anneau torique 28 assure l'étanchéité entre la cage 20 et la surface périphérique de l'extrémité du tiroir creux 19 située vers le clapet 11. D'autre part, deux anneaux toriques 29—30, situés de part et d'autre du canal 23 assurent l'étanchéité entre les deux extrémités de la cage 20 et le corps 1.

Le porte-cadran 6 est sous la forme d'un manchon tubulaire portant extérieurement, à son extrémité opposée au fond de la manette 4, un cadran 31 gradué en degrés de température. Ce cadran présente intérieurement au moins un plat ou un profil équivalent 32 coopérant avec un plat ou profil correspondant 33 de col 2 du corps 1 pour coulisser sans tourner sur ce col 2. Sur sa périphérie ce porte-cadran présente une rainure en spirale 34 à pas variable dans laquelle est engagée une goupille 35 solidaire de la jupe 5 de la manette 4 et destinée à entraîner longitudinalement le porte-cadran 6 lors du mouvement de rotation et d'avance (ou de recul) de la manette 4. Le bord de la jupe 5 de la manette 4 porte un repère ou index 36 permettant de lire en regard sur le cadran 31 la température de sortie d'eau mélangée que est réglée par la manette 4 quand la manoeuvre d'ouverture de cette manette 4 a fair apparaitre le cadran 31 au-delà de l'extrémité de la jupe 5 de la manette car, dans la position de fermeture représentée, le cadran 31, complètement encastré dans la manette 4, est invisible de l'opérateur.

On décrira maintenant le fonctionnement du mitigeur représenté quand on tourne la manette de commande 4 à partir de la position de fermeture représentée sur la figure 1.

Une légère rotation de la manette 4 effectue un certain dévissage du poussoir 3, c'est-à-dire son déplacement vers la droite de la figure 1, de sorte que le clapet 7 se laisse soulever de son siège par la pression de l'eau et par l'action du ressort de rappel 21. A ce moment, l'eau froide pénètre sans aucune restriction dans la chambre principale 9 du mitigeur, car seul le clapet 11 la contrôlera le moment venu, et celui-ci est, pour l'instant, écarté de son siège 10. L'eau froide sort de mitigeur et son débit est contrôlé par le clapet 7.

L'eau chaude arriverait, après allumage du chauffeeau, par les passages 22, mais est presque totalement bloquée par le segment fendu 25 en polytétrafluoréthylène. Il s'agit d'un segment identique à ceux équipant les pistons de moteurs à explosions. Ce segment 25 fendu en biseau tend à augmenter de diamètre sous l'action de la pression d'eau chaude et vient faire une étanchéité relativement bonne sur son diamètre extérieur. Une légère fuite peut subsister, mais n'est pas suffisante pour déclencher l'allumage du générateur d'eau chaude et, quelle qu'en soit la provenance, l'appareil reste donc alimenté en eau froide. Ce type de clapet a l'avantage d'avoir un fonctionnement très doux, dû au polytétrafluoréthylène (dont l'utilisation pour le même but est déjà décrite par exemple dans le documents FR—A—2 019 369), et de ne nécessiter aucun positionnement précis longitudinalement, ce qui donne par ailleurs l'assurance de la fermeture normale et correcte du clapet principal 7. En effet, il est toujours illusoire de vouloir obtenir la fermeture simultanée de deux clapets, surtout de deux clapets plats, lorsque l'un au moins de ceux-ci est en caoutchouc. Enfin, ce modèle de clapet "chaud" à segment 25 permet de n'ouvrir l'eau chaude qu'après une course prédéterminée de l'ensemble mobile résultant d'une rotation supplémentaire de la manette 4.

Si maintenant on tourne la manette 4 un peu plus, l'équipage mobile continue de se déplacer sous l'action du ressort de rappel 21 de sorte que le segment 25 découvre progressivement les passages 22 en permettant l'entrée d'eau chaude. On obtient un mélange d'eau froide et d'eau chaude dont la température augmente au fur et à mesure de la rotation de la manette, mais l'appareil se comporte seulement encore en mitigeur mécanique.

Si on continue de faire tourner la manette dans le sens de l'ouverture, le clapet principal 7 s'ouvre totalement et le clapet "froid" 11 se rapproche de son siège 10 en permettant la stabilisation de la température, par appoint thermostatique d'eau froide. Les rondelles découpées 16 sont des rondelles bimétalliques, par ailleurs bien connues (voir par exemple le document US—A—3 090 559) et que constituent un empilage dont la longueur augmente avec la température. Lors d'une diminution de la pression d'eau froide, par exemple, la température aura tendance à monter. La longueur de l'ensemble des bilames augmentera en repoussant le tiroir 19 et par conséquent en éloignant le clapet "froid" 11 de son siège et en rendant alors plus important le débit d'eau froide, ce qui aura une action stabilisatrice sur la température du mélange. Il convient de remarquer que, contrairement à tous les dispositifs existants, l'équipage, thermostatique n'agit pas sur un clapet double "froid-chaud", mais sur un clapet unique "froid" 11. L'eau chaude ne sera par freinée dans cette séquence du fonctionnement, et la générateur ne risquera pas de s'éteindre, éliminant ainsi les incertitudes de fonctionnement subies par les mitigeurs traditionnels.

La régulation reste comparable aux appareils à double clapet froid-chaud.

Enfin il faut remarquer que ce clapet unique froid 11 permet d'avoir un appareil plus simple et donc plus fiable et moins coûteux que les mitigeurs traditionnels.

On exposera maintenant le repérage de la température sur le cadran 31. Le mouvement de l'équipage mobile nécessite plusieurs tours de manette (environ 2 à 3) avant d'être en position de régulation à 37°C. Aussi, il ne faut pas qu'il y ait risque de confusion à 1 ou 2 tours près dans le repérage. Le montage décrit ci-dessus pour le porte-cadran 6 permet de ne faire apparaître le cadran gradué 31 (exemple 35—37—39°C) qu'au dernier tour de manoeuvre. La rainure en spirale 34 creusée dans le cadran est à avance irrégulière. Au début de la rotation de la manette dans le sens de l'ouverture, le cadran, mû par la goupille 35 et la filetage du poussoir 3, avance progressivement à l'intérieur de la manette, mais reste toujours invisible. Un demi-tour avant que l'équipage n'arrive en position de fonctionnement 37°C, le pas de la rainure 34, qui était au minimum, augmente brusquement jusqu'à une avance nulle en entraînant le cadran hors de sa cache et en permettant aux indications 35—37—39°C d'apparaître, la raînure restant à avance nulle sur le tour restant en permettant au cadran 31 de paraître immobile par rapport à la manette 4.

Sur la dernière portion de mouvement possible, le clapet froid 11 se rapproche et reste sur le siège 10 de manière que l'on puisse éventuellement obtenir une température d'eau mitigée supérieure.

Bien qu'on ait décrit un exemple d'exécution avec organe thermostatique du type à rondelles bilames, on comprendra que cette constitution de l'organe thermostatique n'a aucun caractère limitatif et qu'on pourrait employer tout autre organe thermostatique d'une longueur variable avec sa température. Par exemple, comme déjà proposé dans le document US—A—2 997 239, on pourrait utiliser comme organe thermostatique une capsule à cire dilatable.

On remarquera encore que la fermeture de l'eau chaude par un tiroir laisse toute liberté de dilatation à l'organe thermostatique en cas de forte élévation de la température sans que cette dilatation soit limitée par une butée risquant de détruire l'organe thermostatique ou imposant l'adjonction d'un ressort de sécurité pour éviter cette destruction.

On a vu que le débit de l'eau mitigée était imposé. Dans la majeure partie des cas, le générateur est de puissance modeste et la débit reste faible. Dans les cas où la puissance installée est plus forte, il peut être nécessaire d'avoir un réglage ajustable une fois pour toutes du débit d'alimentation eau chaude pour que le débit de sortie ne soit pas trop abondant. Les générateurs sont en général dans ce cas dits "à puissance variable", et le freinage de leur débit d'entraîne pas une augmentation de la température d'eau chaude, comme ce serait le cas sur des générateurs de faible puissance.

La figure 2 montre un exemple de réalisation d'un tel réglage de l'entrée d'eau chaude alimentant l'appareil par l'arrivée d'eau chaude 24. Le dispositif de réglage est associé à un petit clapet anti-retour 37 dont la moitié supérieure a été représentée sur la figure 2 en position d'ouverture tandis que sa moitié inférieure a été représentée en position de fermeture. Ce dispositif de réglage est alors constitué par une vis de réglage 38 qui limite l'ouverture du clapet anti-retour 37.

## Revendications

1. Mitigeur thermostatique destiné à être alimenté en eau chaude par un générateur à allumage instantané, possèdant une manette de commande à vis (4), une commande unique à déplacement longitudinal (3, 14, 15) qui agit par l'intermédiaire d'un organe thermostatique (16) sur les passages d'arrivée d'eau froide (12) et d'eau chaude (24), dans lequel les différents

7       **0 029 761**       8

réglages de la température d'émission de l'eau s'effectuent par le déplacement longitudinal d'une pièce unique (19) dont une première extrémité (11, 18) règle progressivement un passage (10) d'arrivée d'eau froide tandis qu'une seconde extrémité (39) commande un passage (22) d'arrivée d'eau chaude, caractérisé par le fait que ladite seconde extrémité (39) de ladite pièce unique (19) comporte un joint annulaire (25) constitué par un segment fendu en matière à faible coefficient de frottement, mobile en position d'obturation sans étanchéité rigoureuse dans une cage (20) de façon à freiner suffisamment le passage d'eau chaude pour que le générateur ne s'allume pas lorsque ledit joint (25) est en position d'obturation.

2. Mitigeur thermostatique selon la revendication 1, caractérisé par l'association à ladite manette de commande à vis (4), d'un écran chiffré (31) escamotable en position de fermeture, entraîné longitudinalement par la rotation de la manette (4) de façon à n'être découvert par la manette lors de la manoeuvre d'ouverture qu'en correspondance à une zone de fonctionnement thermostatique laquelle est parcourue sans déplacement longitudinal relatif du cadran (31) par rapport à la manette dans toute cette zone.

3. Mitigeur thermostatique selon la revendication 1 ou la revendication 2, caractérisé par une vis de réglage (38) au moins sur l'arrivée d'eau chaude pour maintenir le débit d'eau mitigée dans des limites acceptables quand le générateur d'eau chaude est très puissant, une autre vis de réglage pouvant être prévue sur l'alimentation en eau froide.

**Patentansprüche**

1. Thermostaten-Mischbatterie bzw. Mischventil mit Heißwasserzufuhr von einem augenblicklich zündenden bzw. betreibbaren Heißwasserbereiter (Durchlauferhitzer), mit einem schraubbaren Betätigungsgriff (4) und einem zur Verstellung in Längsrichtung dienenden Steuerungsorgan (3, 14, 15), das über einen Thermostaten (16) auf die Kaltwasser- (12) und Heißwasserzuleitungen (24) einwirkt, in dem die verschiedenen Temperaturregulierungen bzw. -einstellungen für das ausströmende Wasser durch Längsverstellen eines einzigen Teiles (19) erfolgen, von dem ein Ende (11, 18) stufenlos eine Kaltwasserzuführung regelt bzw. steuert, während ein zweites Ende (39) eine Heißwasserzuführung steuert, dadurch gekennzeichnet, daß das zweite Ende (39) des einzigen Teiles (19) eine ringförmige Dichtung (25) aufweist, die aus einem geschlitzten Teil aus einem Werkstoff mit niedrigem Reibungskoeffizienten besteht und in der Sperrstellung ohne absolute Abdichtung in einem Laufkäfig (20) so bewegbar ist, daß der Heißwasserdurchlauf in der Sperrstellung der Dichtung (25) ausreichend unterbrochen ist, damit der Heißwasserbereiter nicht zündet.

2. Thermostaten-Mischbatterie nach Anspruch 1, dadurch gekennzeichnet, daß mit dem schraubbaren Betätigungsgriff (4) ein in der Sperrstellung kippbarer bezifferter Schirm (31) verbunden und in Längsrichtung durch Drehung des Betätigungsgriffs (4) so betätigbar ist, daß er beim Öffnungsvorgang vom Betätigungsgriff nur in Einklang mit einem thermostatisch gesteuerten Betriebsbereich geöffnet ist, der ohne relative Längsverstellung des Schirms bzw. der Skala (31) bezüglich des Betätigungsgriffs diesen gesamten Bereich durchläuft.

3. Thermostaten-Mischbatterie nach Anspruch 1 oder 2, dadurch gekennzeichnet, daß eine Einstellschraube (38) zumindest für die Heißwasserzuführung zur Aufrechterhaltung des Mischwasserauslaufs innerhalb zulässiger Grenzen, solange der Heißwasserbereiter sehr stark arbeitet, und gegebenenfalls außerdem für die Kaltwasserzuführung eine Einstellschraube vorgesehen ist.

**Claims**

1. Thermostatic mixing valve designed to be supplied with hot water by an instantaneous ignition generator and having a screw control handle (4), a single control for longitudinal displacement (3, 14, 15) which acts through a thermostatic member (16) on the passages for arrival of cold water (12) and hot water (24), in which the various temperature settings for the emission of water are made by the longitudinal displacement of a single member (19) of which a first end (11, 18) progressively regulates a cold water supply passage (10), while a second end (39) controls a hot water supply passage (22), characterised in that the said second end (39) of the said single member (19) comprises an annular seal (25) consisting of a split segment with a low coefficient of friction which is movable into an occluding position without any strict fluid tightness in a cage (20) in order sufficiently to arrest the passage of hot water for the generator not to ignite when the said seal (25) is in the occlusion position.

2. Thermostatic mixing valve according to Claim 1, characterised by the association with the said screw control handle (4) of a numbered panel (31) which can be concealed in the closure position but which is driven longitudinally by rotation of the handle (4) in such a way that it is uncovered by the handle during the opening manoeuvre only when corresponding to a thermostatic operating zone which is traversed without longitudinal relative displacement of the panel (31) in respect of the handle throughout this zone.

3. Thermostatic mixing valve according to Claim 1 or Claim 2, characterised by a set screw (38) at least on the hot water supply in order to maintain the rate of flow of mixed water within acceptable limits when the hot water generator is very powerful, another set screw possibly being provided on the cold water supply.

Fig:1

0029761

*Fig. 2*

2